# EUROPEAN PATENT SPECIFICATION

(11) **EP 1 395 068 B1**
(45) Date of publication and mention of the grant of the patent: **23.06.2010**
(21) Application number: 02360253.5
(22) Date of filing: 30.08.2002
(51) Int. Cl.: H04W 48/18

(54) **Method and system for selecting a radio acces network**
Verfahren und System zur Funkzugangwahl
Méthode et système de selection d'un reseau d'accès

(43) Date of publication of application: 03.03.2004
(73) Proprietor: Alcatel Lucent, 75008 Paris (FR)
(72) Inventor: Sigle, Rolf, 71384 Weinstadt (DE); Barth, Ulrich, 70825 Münchingen (DE)
(74) Representative: Urlichs, Stefan

(56) References cited:
- DE-A- 10 064 951
- DE-A- 19 957 642
- US-A- 5 664 004
- BERRUTO E ET AL: "ARCHITECTURAL ASPECTS FOR THE EVOLUTION OF MOBILE COMMUNICATIONS TOWARD UMTS" IEEE JOURNAL ON SELECTED AREAS IN COMMUNICATIONS, IEEE INC. NEW YORK, US, vol. 15, no. 8, 1 October 1997 (1997-10-01), pages 1477-1486, XP000721279 ISSN: 0733-8716

## Description

### BACKGROUND OF THE INVENTION

The present invention relates to radio access networks (RAN) in the context of multiple simultaneously accessible RAN technologies.

Known in the art is a terminal equipped with several radio interfaces (e.g. a Wireless Local Area Network (WLAN) interface and a radio communication network GSM/UMTS interface). The terminal may access to the core network of a wide range cellular radio communication network (e.g. GSM, UMTS) either over a WLAN RAN or over a wide range cellular communication network dedicated RAN (e.g. UTRAN), each RAN comprising a RAN controller.

In areas where WLAN and usual radio communication networks are overlapping, it is advantageous to foresee roaming between the WLAN and the usual cellular radio communication network in order to optimize the overall resource usage and provide a better load balancing between the different radio access networks. For this purpose, the optimization is controlled from the core network of the radio communication network since the RANs are not able to exchange directly information between each other.

This solution presents the drawback that the optimization procedure is not flexible enough since it is controlled by the core network and requires a lot of signaling traffic between the RANs and the core network. Moreover, important information like e.g. the air interface status (e.g. load, interference situation, ...) is not available in the core network. Hence, these parameters cannot be taken into account in the air interface selection process which leads therefore to a non-optimal selection and waste of radio resources.

US patent 5,664,004 discloses a mobile radio system which support multiple radio interfaces and multiple signaling protocols over these interfaces. The mobile switch and the base station controller must be able of recognizing to which signalling protocol a message transfer on a single interface belongs to.

German patent application DE10064951 discloses an communication terminal comprising means for controlling the transmission over different paths of communication depending on user profile, information related to the transmission quality and information related to different network. The optimal communication path is selected at the mobile terminal.

German patent application DE199 57 642 discloses a method for transmitting data over a radio transmission system wherein a CPU at a network exchange determine which one of a plurality of radio transmission systems better fulfils the data transmission requirements in term of position. User profile, velocity of the terminal. A modification of the radio transmission system may be performed during a communication. Possible radio transmission systems are GSM, UMTS, DAB, DVB.

A particular object of the present invention is to provide an integrated Radio Access Network (RAN) controller which enables it to perform optimization procedures without impacting the core network.

Another object of the invention is to provide a method for automatically selecting a RAN using the integrated RAN controller.

### SUMMARY OF THE INVENTION

These objects, and others that appear below, are achieved by an integrated RAN controller according to claim 1, and a method for selecting one RAN according to claim 5.

According to the present invention, the integrated RAN controller integrates in a single functional entity the functionality of several RAN controller and several RAN management modules, in order to support several RAN technologies each adapted to handle a specific traffic type. This functional entity may be implemented in a single network element or in a distributed way. The integrated RAN controller comprises as many RAN controllers as available RAN technologies in an area.

Moreover, the integrated RAN controller comprises a RAN management module which selects automatically at call set-up or during an established call (e.g. in case of handover, congestion, ...) the best suited RAN to fulfil the terminal requirements and guaranty a good resource usage between the different RAN technologies as well as an uninterrupted service for the terminal.

Moreover, the RAN management module may also be involved in the control of the radio bearers and in the mobility management of the mobile terminals.

As a consequence, it is not necessary to involve the core network in this procedure since the decision is directly made in the integrated RAN controller.

The method according to the present invention presents the advantage to decrease the signaling overhead and delay in case of handover between several RAN technologies.

Another advantage of the present invention is to allow parallel multimedia connections to one single terminal using different RAN technologies.

Another advantage of the present invention consists in simplifying the integration of new air interfaces since most of the control of the air interface (e.g. bearer control, RAN mobility management) is performed in an unified way at the integrated RAN controller and can be easily reused when a new air interface is added.

Further advantageous features of the invention are defined in the dependent claims.

### BRIEF DESCRIPTION OF THE DRAWINGS

Other characteristics and advantages of the invention will appear on reading the following description of a preferred embodiment given by way of non-limiting illustrations, and from the accompanying drawings, in which:
- Figure 1 shows an integrated RAN controller according to the present invention;
- Figure 2 shows an implementation of the method for selecting a RAN according to the present invention.

### DETAILED DESCRIPTION OF THE INVENTION

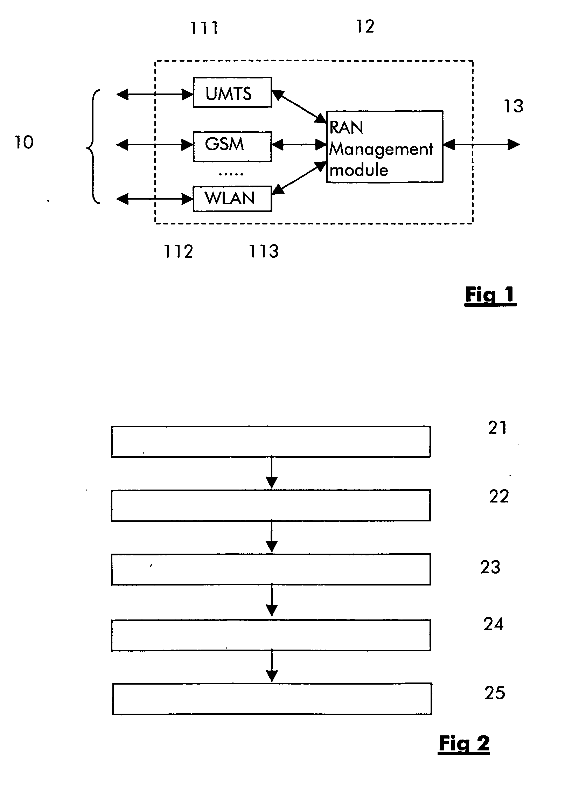

Figure 1 shows an integrated RAN controller according to the present invention. The integrated RAN controller comprises three RAN controller modules 111, 112, 113 each one related to a different radio link technology.

RAN controller module 111 is for example adapted to handle UMTS radio link connections, RAN controller module 112 for GSM radio link connections and RAN controller module 113 WLAN radio link connections.

Preferably, at least two of the RANs 111, ..., 113 covers the same geographical area to offer an alternative for selecting one of these RANs for a connection. In a preferred embodiment, one RAN may be a wide range cellular network (GSM, UMTS) while the other RAN additionally covering a predefined area would be a WLAN with pico-cells as overlay over the wide range cellular network.

It will be clear for a person skilled in the art that the number of RAN controller modules in the integrated RAN controller module as well as the type of technology supported by the integrated RAN controller are not restricted to those presented in figure 1 but can be extended to any combination of known and future RAN technologies.

Integrated RAN controller further comprises a RAN management module 12. RAN management module 12 is connected to the RAN controller modules 111, ..., 113 and comprises means for selecting one RAN controller module.

RAN controller modules 111, ..., 113 are accessible over air interfaces 10, while RAN management module 12 is connected over an interface 13 to the core network of the wide range cellular radio communication network.

In a preferred embodiment of the present invention, RAN management module 12 further comprises means for managing simultaneously connections to one mobile terminal over different air interfaces. For this purpose, RAN management module 12 comprises a table listing the mobile terminal identifiers together with the available air interfaces at the mobile terminal as well as the already used air interfaces at the mobile terminal.

In another preferred embodiment of the present invention, RAN management module 12 comprises means for performing handover between two air interfaces available at a mobile terminal. For this purpose the above described table is also used to know which air interface are still available at the mobile terminal.

For performing this functionality, the integrated RAN does not require the help of the core network 13 and can perform this functionality autonomously. However, information on the air interface modification may be signaled to the core network for further processing if necessary without departing from the scope of the present invention.

In another embodiment of the present invention, the functionality of the integrated RAN controller may be realized in the form of a distributed architecture without departing from the scope of the present invention. In this case, the integrated RAN controller consists in a single functional entity embodying the functionality of several RAN controller and several RAN management modules, in order to support several RAN technologies each adapted to handle a specific traffic type.

A possible implementation could consists in separating the user plane and the control plane of the controller, each plane being implemented in a separated server.

Another possible implementation could consist in separating the RAN controllers and the RAN management module, each one being implemented in a separate server. The way an integrated RAN controller may be realized as a distributed system will not be further described here but will be clear for a person skilled in the art.

Figure 2 shows an implementation of the method for selecting a RAN according to the present invention. This method is performed preferably at RAN management module 12 to optimize the overall radio resources i.e. the radio resources for all RAN available at the integrated RAN controller. The method according to the present invention guaranties a good resource usage and can be used for providing a seamless roaming between two RANs controlled by the integrated RAN controller. Moreover this method gives a better QoS in term of call blocking and handover dropping.

In a preferred embodiment, the method comprises following steps:
Step 21 consists in evaluating predefined parameters related to a mobile terminal to or from which a call should be or is established. These predefined parameters may be the terminal capabilities (e.g. supported air interfaces, supported modes, terminal class), the terminal speed, ....
Step 22 consists in evaluating predefined parameters related to a service required by the end-user. These predefined parameters may be the service QoS requirements, and the service traffic characteristics (e.g. data rate, burstiness...).
Step 23 consists in evaluating predefined parameters related to the different air interfaces corresponding to the different RANs controlled by the integrated RAN controller. Such parameters can be the current transmitted traffic, load/free capacity of the air interface, the supported services, the cell coverage, the cell size....
Step 24 consists in computing an indicator for each air interface, the indicator representing the degree of optimization the choice of each air interface would achieve. The indicator depends on parameter related to the terminal as evaluated at step 21, to the service as evaluated at step 22, and on parameters related to the air interface as evaluated at step 23.

A possible way of determining the indicators may consist in checking if a required service may be provided by the air interface or in checking which air interface have the highest amount of available resources adapted to provide the required service. As a consequence, the type of required service itself can determine the used air interface. The selection of the used air interface may also be determined by a combination of different criteria related to the terminal, the service and the air interface.

If these criterions are fulfilled, the indicator for the considered air interface will be given a high value. It will however be clear for a person skilled in the art that other criteria may be computed for determining indicators which also represent the ability of a connection to optimize the resource usage between the different RAN and the quality of service.

In a preferred embodiment of the present invention, the terminal speed influences the indicator in that the selection of a RAN with pico cells (e.g. WLAN) will be avoided if the terminal speed exceeds a predefined speed threshold. This enables it to limit the number of unnecessary handover.

Step 25 consists in selecting the air interface which provide the indicator the best adapted to optimize the resource usage and the quality of service.

## Claims

1. Integrated RAN controller comprising
- two or more RAN controller modules (111, ..., 113) each related to a different RAN technology, each RAN controller module (111, ..., 113) being able to establish a connection to a common core radio communication network (13); said integrated RAN controller being **characterized in that** it further comprises:
- a RAN management module (12) connectable to said RAN controllers (111, ..., 113), said RAN management module (12) comprising means for selecting one RAN controller for establishing a connection to said core radio communication network, said selection taking into account an indicator calculated for each of said different RANs -and representing the ability to optimize the resource usage and the quality of service in said at least two RANs connected to said integrated RAN controller.

2. Integrated RAN controller according to claim 1, **characterized in that** said RAN management module (12) further comprises means for managing several simultaneous connections to one mobile terminal over different RANs.

3. Integrated RAN controller according to claim 1, **characterized in that** said RAN management module (12) further comprises means for handing over a connection between different RANs.

4. Integrated RAN controller according to claim 1, **characterized in that** it is implemented in a distributed architecture.

5. Method for selecting at an integrated RAN controller one RAN out of a plurality of RANs controlled by said integrated RAN controller, each of said RANs being dedicated to enable a connection between a mobile terminal and a core radio communication network over an air interface, said mobile terminal requiring a service from said core radio communication network, said method being **characterized in that** it comprises the steps of:
- evaluating (21) predefined parameters related to said mobile terminal;
- evaluating (22) predefined parameters related to said service;
- evaluating (23) predefined parameters related to at least two of said air interfaces;
- evaluating (24) a indicator for each of said at least two air interfaces depending on said parameters related to said mobile terminal, to said service, and to said air interface, said indicator being related to the ability of a connection over this air interface to optimize resource usage, system throughput and quality of service;
- selecting (25) the air interface having the indicator the best adapted to optimize resource usage, system throughput and quality of service.

6. Method according to claim 5, operating the selection between a RAN belonging to a wide range cellular radio communication network and a RAN consisting in a wireless LAN interconnected with said wide range radio communication network.

7. Method according to claim 5, wherein said parameters related to said mobile terminal comprise the terminal capability.

8. Method according to claim 7, wherein said parameters related to said mobile terminal further comprise the terminal speed.

9. Method according to claim 5, wherein said parameters related to said air interfaces comprise the current traffic on said air interface.

## Patentansprüche

1. Integrierter RAN-Controller, umfassend:
- Zwei oder mehr RAN-Controller-Module (111, ..., 113), welche sich jeweils auf eine verschiedene RAN-Technologie beziehen, wobei jedes RAN-Controller-Modul (111, ..., 113) dazu ausgelegt ist, eine Verbindung zu einem üblichen Kern-Funkkommunikationsnetzwerk (13) aufzubauen; wobei der besagte integrierte RAN-Controller **dadurch gekennzeichnet ist, dass** er weiterhin umfasst:
- Ein RAN-Verwaltungsmodul (12), welches an die besagten RAN-Controller (111, ..., 113) anschließbar ist, wobei das besagte RAN-Verwaltungsmodul (12) Mittel zum Auswählen eines RAN-Controllers für den Aufbau einer Verbindung zu dem besagten Kern-Funkkommunikationsnetzwerk umfasst, wobei das Auswählen unter Berücksichtigung eines für einen jeden der besagten verschiedenen RANs berechneten und die Fähigkeit, die Ressourcennutzung und die Dienstgüte in den besagten mindestens zwei RANs, welche an den besagten integrierten RAN-Controller angeschlossen sind, darstellenden Indikators erfolgt.

2. Integrierter RAN-Controller nach Anspruch 1, **dadurch gekennzeichnet, dass** das besagte RAN-Verwaltungsmodul (12) weiterhin Mittel zum Verwalten mehrerer gleichzeitiger Verbindungen zu einem Mobilendgerät über verschiedene RANs umfasst.

3. Integrierter RAN-Controller nach Anspruch 1, **dadurch gekennzeichnet, dass** das besagte RAN-Verwaltungsmodul (12) weiterhin Mittel für die Übergabe einer Verbindung zwischen verschiedenen RANs umfasst.

4. Integrierter RAN-Controller nach Anspruch 1, **dadurch gekennzeichnet, dass** er in einer verteilten Architektur eingesetzt wird.

5. Verfahren zur Auswahl, an einem integrierten RAN-Controller, eines RANs aus einer Mehrzahl von RANs, welche von dem besagten integrierten RAN-Controller gesteuert werden, wobei ein jedes der besagten RANs dazu bestimmt ist, eine Verbindung zwischen einem Mobilendgerät und einem Kern-Funkkommunikationsnetzwerk über eine Luftschnittstelle zu ermöglichen, wobei das besagte Mobilendgerät einen Dienst von dem besagten Kern-Funkkommunikationsnetzwerk anfordert, wobei das besagte Verfahren **dadurch gekennzeichnet ist, dass** es die folgenden Schritte umfasst:
- Bewerten (21) von vordefinierten Parametern in Bezug auf das besagte Mobilendgerät;
- Bewerten (22) von vordefinierten Parametern in Bezug auf den besagten Dienst;
- Bewerten (23) von vordefinierten Parametern in Bezug auf mindestens zwei der besagten Luftschnittstellen;
- Bewerten (24) eines Indikators für eine jede der besagten mindestens zwei Luftschnittstellen auf der Basis der besagten Parameter, welche sich auf das besagte Mobilendgerät, auf den besagten Dienst und auf die besagte Luftschnittstelle beziehen, wobei sich der besagte Indikator auf die Fähigkeit einer Verbindung über diese Luftschnittstelle zur Optimierung der Ressourcennutzung, des Systemdurchsatzes und der Dienstgüte bezieht;
- Auswählen (25) der Luftschnittstelle mit dem am besten für die Optimierung der Ressourcennutzung, des Systemdurchsatzes und der Dienstgüte angepassten Indikator.

6. Verfahren nach Anspruch 5, wobei das Verfahren die Auswahl zwischen einem RAN, welches einem zellularen Breitband-Funkkommunikationsnetzwerk angehört, und einem RAN bestehend aus einem mit dem besagten Breitband-Funkkommunikationsnetzwerk vermaschten drahtlosen LAN ausführt.

7. Verfahren nach Anspruch 5, wobei die besagten das besagte Mobilendgerät betreffenden Parameter die Leistungsfähigkeit des Endgerätes umfassen.

8. Verfahren nach Anspruch 7, wobei die besagten das besagte Mobilendgerät betreffenden Parameter weiterhin die Geschwindigkeit des Endgerätes umfassen.

9. Verfahren nach Anspruch 5, wobei die besagten die besagten Luftschnittstellen betreffenden Parameter den momentanen Verkehr auf der besagten Luftschnittstelle umfassen.

## Revendications

1. Contrôleur RAN intégré comprenant
- au moins deux modules contrôleurs RAN (111, ..., 113) chacun étant associé à une technologie RAN différente, chaque module contrôleur RAN (111, ..., 113) étant capable d'établir une connexion à un réseau de radiocommunications coeur commun (13) ; ledit contrôleur RAN intégré étant **caractérisé en ce qu'**il comprend en outre :
- un module de gestion RAN (12) pouvant être connecté auxdits contrôleurs RAN (111, ..., 113), ledit module de gestion RAN (12) comprenant des moyens de sélection d'un contrôleur RAN pour établir une connexion audit réseau de radiocommunications coeur commun, ladite sélection tenant compte d'un indicateur calculé pour chacun desdits différents RAN et représentant la capacité à optimiser l'utilisation des ressources et la qualité de service dans lesdits au moins deux RANs connectés audit contrôleur RAN intégré.

2. Contrôleur RAN intégré selon la revendication 1, **caractérisé en ce que** ledit module de gestion RAN (12) comprend en outre des moyens de gestion des nombreuses connexions simultanées à un seul terminal mobile sur différents RANs.

3. Contrôleur RAN intégré selon la revendication 1, **caractérisé en ce que** ledit module de gestion RAN (12) comprend en outre des moyens de transfert d'une connexion entre différents RANs.

4. Contrôleur RAN intégré selon la revendication 1, **caractérisé en ce qu'**il est mis en oeuvre dans une architecture répartie.

5. Procédé de sélection, au niveau d'un contrôleur RAN intégré, d'un RAN parmi une pluralité de RANs contrôlés par ledit contrôleur RAN intégré, chacun desdits RANs étant dédié à permettre une connexion entre un terminal mobile et un réseau de radiocommunications coeur commun sur une interface hertzienne, ledit terminal mobile exigeant un service à partir dudit réseau de radiocommunications coeur commun, ledit procédé étant **caractérisé en ce qu'**il comprend les étapes consistant à :
- évaluer (21) les paramètres prédéfinis relatifs audit terminal mobile ;
- évaluer (22) les paramètres prédéfinis relatifs audit service ;
- évaluer (23) les paramètres prédéfinis relatifs auxdites au moins deux parmi lesdites interfaces hertziennes ;
- évaluer (24) un indicateur pour chacune desdites au moins deux interfaces hertziennes selon lesdits paramètres relatifs audit terminal mobile, audit service, et à ladite interface hertzienne, ledit indicateur étant associé à la capacité d'une connexion sur cette interface hertzienne d'optimiser l'utilisation des ressources, le débit du système ainsi que la qualité de service ;
- sélectionner (25) l'interface hertzienne ayant l'indicateur le plus adapté pour optimiser l'utilisation des ressources, le débit du système et la qualité de service.

6. Procédé selon la revendication 5, effectuant la sélection entre un RAN appartenant à un réseau de radiocommunications cellulaire à large bande et un RAN composé d'un réseau LAN sans fil interconnecté audit réseau de radiocommunications cellulaire à large bande.

7. Procédé selon la revendication 5, dans lequel lesdits paramètres relatifs audit terminal mobile comprennent la capacité du terminal.

8. Procédé selon la revendication 7, dans lequel lesdits paramètres relatifs audit terminal mobile comprennent en outre la vitesse du terminal.

9. Procédé selon la revendication 5, dans lequel lesdits paramètres relatifs auxdites interfaces hertziennes comprennent le trafic actuel sur ladite interface hertzienne.
